# FASCICULE DE BREVET EUROPEEN

(11) **EP 3 486 592 B1**
(45) Date de publication et mention de la délivrance du brevet: **01.07.2020**
(21) Numéro de dépôt: 18202131.1
(22) Date de dépôt: 23.10.2018
(51) Int. Cl.: F28D 5/00, B60H 1/00, B60H 1/32, F28D 21/00

(54) **PROCÉDÉ DE REFROIDISSEMENT D'UN CONDENSEUR DE SYSTÈME DE CLIMATISATION POUR VÉHICULE AUTOMOBILE**
KÜHLVERFAHREN EINES KONDENSATORS EINES KLIMAANLAGENSYSTEMS FÜR KRAFTFAHRZEUG
METHOD FOR COOLING A CONDENSER OF A MOTOR VEHICLE AIR-CONDITIONING SYSTEM

(30) Priorité: 16.11.2017 FR 1760775
(43) Date de publication de la demande: 22.05.2019
(73) Titulaire: RENAULT s.a.s., 92100 Boulogne-Billancourt (FR)
(72) Inventeur: MARY, Stephane, 78450 VILLEPREUX (FR); BRUCK, Sylvain, 78114 MAGNY LES HAMEAUX (FR); LEFEBVRE, Alain, 78750 MAREIL MARLY (FR)

(56) Documents cités:
- US-A- 3 926 000
- US-A- 4 494 384
- US-A- 5 311 747
- US-A- 5 444 991

## Description

La présente invention se rapporte, de manière générale, à un système de climatisation pour véhicule automobile pourvu d'un condenseur, et concerne, plus précisément, un procédé de refroidissement destiné à refroidir un condenseur de système de climatisation pour véhicule automobile.

Les véhicules automobiles sont de plus en plus souvent équipés d'un système de climatisation.

Classiquement, un système de climatisation fonctionne avec un flux de fluide frigorigène circulant dans des tuyaux, le fluide traversant différents éléments, les principaux étant un compresseur, un condenseur, un détendeur, un évaporateur et un ventilateur d'évaporateur et de condenseur.

Le flux de fluide frigorigène arrive dans le compresseur en phase gazeuse et à basse pression. Une fois comprimé, le gaz à haute pression est acheminé jusqu'au condenseur où il est refroidi et liquéfié. Le fluide frigorigène est ensuite transféré vers le détendeur qui provoque la chute de pression du gaz et qui produit du froid. Le fluide frigorigène est alors introduit dans l'évaporateur, dans lequel circule de l'air extérieur à refroidir. Enfin, le ventilateur d'évaporateur permet à l'air refroidi d'être envoyé dans l'habitacle.

Le système de climatisation, qui permet avantageusement de refroidir et d'assainir l'air présent dans l'habitacle est, en contrepartie, très coûteux en énergie.

La réduction de la consommation d'énergie passe généralement par l'amélioration des échanges thermiques découlant du fonctionnement du système de climatisation.

Une solution d'amélioration connue consiste à pulvériser de l'eau sur le condenseur de sorte que l'eau pulvérisée, après évaporation, contribue à abaisser localement la température du fluide frigorigène circulant dans le condenseur.

US-A-3926000 divulgue un procédé et un système de climatisation selon le préambule des revendications 1 et 10 respectivement.

De plus, pour répondre aux normes d'émissions de polluants de plus en plus strictes, et à la réduction de la consommation des véhicules automobiles, il est nécessaire d'optimiser le procédé de pulvérisation d'eau sur le condenseur.

La présente invention concerne un procédé de refroidissement du condenseur optimisé de manière à réduire la consommation du système de climatisation d'un véhicule.

Il est donc proposé un procédé de refroidissement d'un condenseur de système de climatisation pour véhicule automobile, le procédé de refroidissement comprenant une étape de pulvérisation d'eau sur le condenseur par l'intermédiaire d'un dispositif de refroidissement du système de climatisation comprenant un circuit d'alimentation en eau sur lequel est disposée une pompe à eau destinée à alimenter en eau des moyens d'injection pour la pulvérisation d'eau sur le condenseur.

En outre, la pompe à eau est activée par des moyens de commande du dispositif de refroidissement et l'activation de la pompe à eau est effectuée en fonction de la température extérieure.

Selon une autre caractéristique de l'invention, la pulvérisation d'eau sur le condenseur peut être activée lorsque la température extérieure est supérieure à 6°C.

Avantageusement, l'activation de la pompe à eau est effectuée seulement si le système de climatisation est en fonctionnement.

Selon une caractéristique, l'eau de pulvérisation peut être stockée dans un réservoir de stockage, l'activation de la pompe à eau étant effectuée seulement si le niveau d'eau dans le réservoir est compris entre un seuil minimal et un seuil maximal.

Avantageusement, la pression de travail de la pompe à eau est comprise entre 2x10⁵ et 4x10⁵ Pa.

Au sens de la présente invention, dans l'expression « compris entre », les bornes du domaine de valeurs sont comprises dans ce domaine.

De manière encore plus avantageuse, la taille moyenne choisie des gouttes d'eau pulvérisées sur le condenseur est comprise entre 50 et 100 µm.

Préférentiellement, la pulvérisation d'eau sur le condenseur est réalisée selon au moins un cycle de pulvérisation fractionné défini par un enchaînement de séquences de pulvérisation et d'arrêt de la pulvérisation.

Selon une autre caractéristique, le profil d'enchaînement de séquences de pulvérisation et d'arrêt de la pulvérisation du cycle fractionné peut être déterminé en fonction de la température extérieure et/ou du taux d'humidité de l'air extérieur.

De préférence, l'eau destinée à la pulvérisation d'eau sur le condenseur provient de la condensation de l'air à travers un évaporateur du système de climatisation

L'invention concerne également un système de climatisation pour véhicule automobile comprenant un dispositif de refroidissement comportant un circuit d'alimentation en eau, une pompe à eau destinée à alimenter en eau des moyens d'injection pour la pulvérisation d'eau sur le condenseur et des moyens de commande configurés pour contrôler la pompe.

En outre, les moyens de commande sont configurés pour activer la pompe en fonction de la température extérieure.

Selon une autre caractéristique de l'invention, le dispositif de refroidissement peut comprendre un réservoir de stockage pour le stockage de l'eau de pulvérisation, les moyens de commande étant configurés pour activer la pompe en fonction du niveau d'eau dans le réservoir.

De préférence, le dispositif de refroidissement comprend un filtre destiné à l'élimination d'impuretés et/ou de composés organiques contaminants du dispositif de refroidissement.

D'autres buts, avantages et caractéristiques ressortiront de la description qui va suivre, donnée à titre d'exemple purement illustratif et faite en référence aux dessins annexés sur lesquels :
- La figure 1 illustre un dispositif de refroidissement d'un condenseur pour véhicule automobile selon un mode de réalisation de l'invention; et
- La figure 2 représente un organigramme illustrant un procédé mise en œuvre pour le refroidissement d'un condenseur d'un système de climatisation pour véhicule automobile selon un mode de réalisation de l'invention.

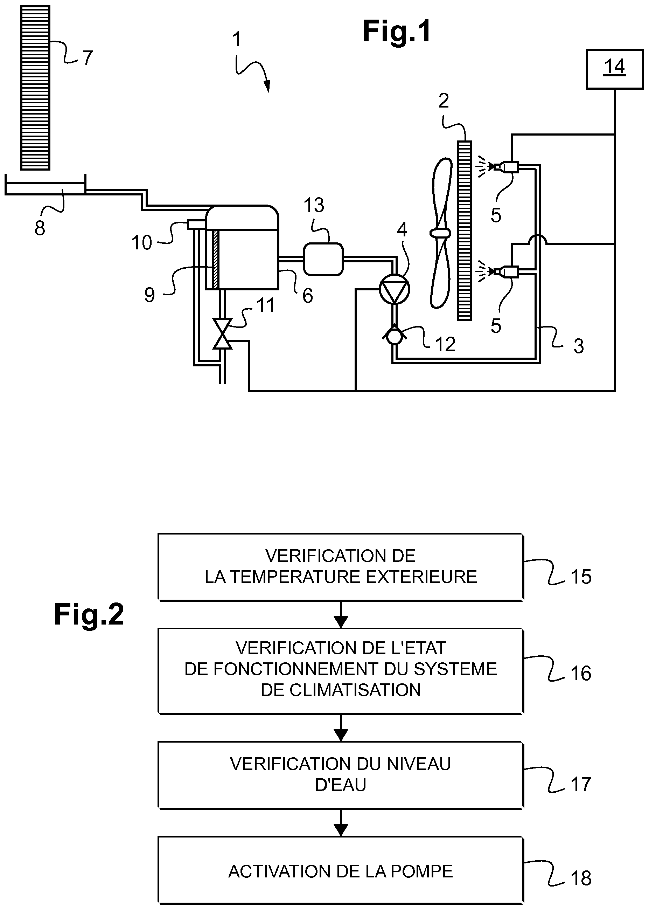

La figure 1 illustre un dispositif de refroidissement 1 d'un condenseur 2 dont est doté un système de climatisation pour véhicule automobile. Le dispositif 1 comprend un circuit d'alimentation 3 en eau comprenant, dans cet exemple, des tuyaux souples en polychlorure de vinyle (PVC) auxquels sont raccordés une pompe à eau électrique 4 et des moyens d'injection 5 pour la pulvérisation d'eau sur le condenseur 2.

De manière avantageuse, la pompe électrique 4 est configurée pour fonctionner à une pression comprise entre 2x10⁵ et 4x10⁵ Pa (soit entre 2 et 4 bars).

Dans l'exemple représenté, les moyens d'injection 5 sont formés par quatre buses de pulvérisation, dont deux seulement sont visibles sur la vue illustrée à la figure 1.

De préférence, les buses 5 sont des buses de type basse pression pulvérisant des gouttes d'eau d'une taille moyenne comprise entre 50 et 100 µm. Elles sont disposées de sorte que l'écoulement de l'eau provenant de la pulvérisation d'eau se fasse à dans le même sens que l'écoulement du flux d'air du système de climatisation en direction du condenseur 2.

Les buses 5 sont, de préférence, positionnées de manière à permettre la pulvérisation d'eau sur la totalité du condenseur 2.

Avantageusement, le dispositif de refroidissement 1 comprend un réservoir de stockage d'eau 6, de préférence de capacité d'environ 1,5 litre, connecté à un évaporateur 7 du système de climatisation du véhicule automobile. De cette façon, le réservoir d'eau 6 est approvisionné par des condensats 8 provenant de l'évaporateur 7, produits lorsque le système de climatisation est en fonctionnement.

De préférence, le réservoir 6 est équipé d'un capteur de niveau d'eau 9 et d'un trop plein 10 permettant d'évacuer l'eau lorsqu'un niveau d'eau maximal est atteint.

En outre, une électrovanne 11 peut être associée au réservoir 6 afin de pouvoir vidanger le réservoir 6 et éviter, par exemple, que l'eau stockée ne gèle lorsque la température extérieure est basse et que le système de climatisation est inactif.

Dans l'exemple illustré, un clapet anti-retour 12 est disposé en aval de la pompe 4, empêchant les buses de pulvérisation 5 de se désamorcer lorsque la pompe 4 ne fonctionne pas.

Le dispositif de refroidissement 1 représenté est également pourvu d'un filtre 13, de préférence un filtre à charbon actif, disposé en aval du réservoir 6, permettant d'assurer à la fois la propreté du circuit d'alimentation en eau 3 en retenant les particules et impuretés, et sa décontamination en absorbant les composés inorganiques de petites tailles (jusqu'à environ 0,5 microns) susceptibles de se retrouver dans l'eau stockée.

Par ailleurs, le dispositif 1 comprend un moyen de commande 14, illustré ici par un calculateur, destinés à l'activation de la pompe électrique 4 pour la pulvérisation de l'eau sur le condenseur 2.

Le moyen de commande 14 peut également être connecté à l'électrovanne 11 ainsi qu'au capteur de niveau 9 de manière à automatiser le contrôle du niveau d'eau dans le réservoir 6 afin qu'il soit maintenu entre un seuil minimal et un seuil maximal.

Comme illustré à la figure 2, un certain nombre de vérifications sont effectuées par le calculateur 14 avant d'autoriser la pulvérisation d'eau sur le condenseur 2.

Dans une première étape 15, le calculateur 14 relève la température extérieure à l'aide d'un capteur de température auquel il est relié, non représenté sur les figures.

Dans l'exemple illustré, si la température extérieure relevée est inférieure ou égale à 6°C, le calculateur 14 n'active pas la pompe 4. Bien entendu, la température extérieure choisie comme seuil pour l'activation de la pompe 4 pourra être modifiée.

Dans ce cas, avantageusement, le calculateur 14 active l'électrovanne 11 afin d'effectuer une vidange totale du circuit d'alimentation en eau 3.

En revanche, lorsque la température est supérieure à 6°C, le calculateur 14 vérifie, dans une deuxième étape 16 l'état de fonctionnement du système de climatisation.

Lorsque le système de climatisation n'est pas en fonctionnement, le calculateur 14 n'active pas la pompe 4.

En revanche, si le système de climatisation est en fonctionnement, le calculateur 14 connecté au capteur de niveau d'eau 9 contrôle, dans une troisième étape, le niveau d'eau dans le réservoir de stockage 6 et vérifie que celui-ci est compris entre un seuil minimal et un seuil maximal prédéfinis.

Lorsque le niveau d'eau est inférieur au seuil minimal, le calculateur 14 n'active pas la pompe 4. Si au contraire le niveau d'eau est supérieur au seuil maximal, le calculateur 14 active l'électrovanne de manière à effectuer une vidange partielle du réservoir 6 jusqu'à ce que le niveau d'eau retourne à un niveau compris entre le seuil minimal et le seuil maximal.

Lorsque le niveau d'eau est compris entre le seuil minimal et le seuil maximal, le calculateur 14 active dans une étape finale 18 la pompe 4 pour l'acheminement des condensats vers les buses 5, également activés, en vue de la pulvérisation d'eau sur le condenseur 2.

Dans un mode de réalisation, la pulvérisation d'eau est réalisée selon au moins un cycle de pulvérisation fractionné, c'est-à-dire défini par un enchaînement de séquences de pulvérisation et de séquences d'arrêt de la pulvérisation.

Le profil d'enchaînement des séquences de pulvérisation et d'arrêt peut être défini et évoluer en fonction de la température extérieure et/ou de l'humidité de l'air extérieur. En effet, lorsque l'air extérieur est très chaud et très sec ou lorsqu'il est frais et très sec, il est nécessaire de pulvériser une forte quantité d'eau sur le condenseur 2. Au contraire, lorsque l'air extérieur est frais et très humide ou bien très chaud et très humide, une faible quantité d'eau pulvérisée suffit à abaisser la température du condenseur 2.

Par exemple, pour une température de 35°C et un taux d'humidité de l'air extérieur de 20%, on pourra définir un cycle de pulvérisation comprenant une alternance de séquences de pulvérisation de 3 secondes et de séquences d'arrêt de la pulvérisation de 5 secondes.

Le procédé de refroidissement décrit permet ainsi de réduire efficacement la consommation globale du véhicule automobile.

## Revendications

1. Procédé de refroidissement d'un condenseur de système de climatisation pour véhicule automobile, le procédé de refroidissement comprenant une étape de pulvérisation d'eau sur le condenseur (2) par l'intermédiaire d'un dispositif de refroidissement (1) du système de climatisation comprenant un circuit d'alimentation en eau (3) auquel est raccordée une pompe à eau (4) destinée à alimenter en eau des moyens d'injection (5) pour la pulvérisation d'eau sur le condenseur (2), **caractérisé en ce que** la pompe à eau (4) est activée par des moyens de commande (14) du dispositif de refroidissement (1) et l'activation de la pompe à eau (4) est effectuée en fonction de la température extérieure.

2. Procédé selon la revendication 1, **caractérisé en ce que** la pulvérisation d'eau sur le condenseur (2) est activée lorsque la température extérieure est supérieure à 6°C.

3. Procédé selon la revendication 1 ou 2, **caractérisé en ce que** l'activation de la pompe à eau (4) est effectuée seulement si le système de climatisation est en fonctionnement.

4. Procédé selon l'une quelconque des revendications précédentes, **caractérisé en ce que** l'eau de pulvérisation est stockée dans un réservoir de stockage (6), l'activation de la pompe à eau (4) étant effectuée seulement si le niveau d'eau dans le réservoir (6) est compris entre un seuil minimal et un seuil maximal.

5. Procédé selon l'une quelconque des revendications précédentes, **caractérisé en ce que** la pression de travail de la pompe à eau (4) est comprise entre 2x10⁵ et 4x10⁵ Pa.

6. Procédé selon l'une quelconque des revendications précédentes, **caractérisé en ce que** la taille moyenne choisie des gouttes d'eau pulvérisées sur le condenseur (2) est comprise entre 50 et 100 µm.

7. Procédé selon l'une quelconque des revendications précédentes, **caractérisé en ce que** la pulvérisation d'eau sur le condenseur (2) est réalisée selon au moins un cycle de pulvérisation fractionné défini par un enchaînement de séquences de pulvérisation et d'arrêt de la pulvérisation.

8. Procédé selon la revendication 7, **caractérisé en ce que** le profil d'enchaînement de séquences de pulvérisation et d'arrêt de la pulvérisation du cycle fractionné est déterminé en fonction de la température extérieure et/ou du taux d'humidité de l'air extérieur.

9. Procédé selon l'une quelconque des revendications précédentes, **caractérisé en ce que** l'eau destinée à la pulvérisation d'eau sur le condenseur (2) provient de la condensation de l'air à travers un évaporateur (7) du système de climatisation.

10. Système de climatisation pour véhicule automobile comprenant un dispositif de refroidissement (1) comportant un circuit d'alimentation en eau (3), une pompe à eau (4) destinée à alimenter en eau des moyens d'injection (5) pour la pulvérisation d'eau sur le condenseur (2) et des moyens de commande (14) configurés pour contrôler la pompe (4), **caractérisé en ce que** les moyens de commande (14) sont configurés pour activer la pompe (4) en fonction de la température extérieure.

11. Système selon la revendication 10, **caractérisé en ce que** le dispositif de refroidissement comprend un réservoir de stockage (6) pour le stockage de l'eau de pulvérisation, les moyens de commande (14) étant configurés pour activer la pompe (4) en fonction du niveau d'eau dans le réservoir (6).

12. Système selon la revendication 10 ou 11, **caractérisé en ce que** le dispositif de refroidissement (1) comprend un filtre (13) destiné à l'élimination d'impuretés et/ou de composés organiques contaminants du dispositif de refroidissement (1).

## Patentansprüche

1. Verfahren zur Kühlung eines Kondensators einer Klimaanlage für ein Kraftfahrzeug, wobei das Verfahren zur Kühlung einen Schritt der Zerstäubung von Wasser auf den Kondensator (2) durch eine Kühlvorrichtung (1) der Klimaanlage umfasst, die einen Wasserversorgungskreislauf (3) umfasst, an welchen eine Wasserpumpe (4) angeschlossen ist, die dazu bestimmt ist, Spritzmittel (5) zur Zerstäubung von Wasser auf den Kondensator (2) mit Wasser zu versorgen, **dadurch gekennzeichnet, dass** die Wasserpumpe (4) von Steuerungsmitteln (14) der Kühlvorrichtung (1) aktiviert wird und die Aktivierung der Wasserpumpe (4) in Abhängigkeit von der Außentemperatur durchgeführt wird.

2. Verfahren nach Anspruch 1, **dadurch gekennzeichnet, dass** die Zerstäubung von Wasser auf den Kondensator (2) aktiviert wird, wenn die Außentemperatur höher als 6 °C ist.

3. Verfahren nach Anspruch 1 oder 2, **dadurch gekennzeichnet, dass** die Aktivierung der Wasserpumpe (4) nur durchgeführt wird, wenn die Klimaanlage in Betrieb ist.

4. Verfahren nach einem der vorhergehenden Ansprüche, **dadurch gekennzeichnet, dass** das Zerstäubungswasser in einem Speicherbehälter (6) gespeichert wird, wobei die Aktivierung der Wasserpumpe (4) nur durchgeführt wird, wenn der Wasserstand in dem Behälter (6) zwischen einem minimalen Schwellenwert und einem maximalen Schwellenwert liegt.

5. Verfahren nach einem der vorhergehenden Ansprüche, **dadurch gekennzeichnet, dass** das Arbeitsdruck der Wasserpumpe (4) zwischen 2x10⁵ und 4x10⁵ Pa liegt.

6. Verfahren nach einem der vorhergehenden Ansprüche, **dadurch gekennzeichnet, dass** die gewählte mittlere Größe der auf den Kondensator (2) zerstäubten Wassertropfen zwischen 50 und 100 µm liegt.

7. Verfahren nach einem der vorhergehenden Ansprüche, **dadurch gekennzeichnet, dass** die Zerstäubung von Wasser auf den Kondensator (2) gemäß wenigstens einem aufgespaltenen Zerstäubungszyklus durchgeführt wird, der durch eine Verkettung von Sequenzen der Zerstäubung und des Aussetzens der Zerstäubung definiert ist.

8. Verfahren nach Anspruch 7, **dadurch gekennzeichnet, dass** das Profil der Verkettung von Sequenzen der Zerstäubung und des Aussetzens der Zerstäubung des aufgespaltenen Zyklus in Abhängigkeit von der Außentemperatur und/oder vom Feuchtigkeitsgrad der Außenluft bestimmt wird.

9. Verfahren nach einem der vorhergehenden Ansprüche, **dadurch gekennzeichnet, dass** das Wasser, das für die Zerstäubung von Wasser auf den Kondensator (2) bestimmt ist, von der Kondensation der Luft durch einen Verdampfer (7) der Klimaanlage stammt.

10. Klimaanlage für ein Kraftfahrzeug, welche eine Kühlvorrichtung (1), die einen Wasserversorgungskreislauf (3) umfasst, eine Wasserpumpe (4), die dazu bestimmt ist, Spritzmittel (5) zur Zerstäubung von Wasser auf den Kondensator (2) mit Wasser zu versorgen, und Steuerungsmittel (14), die dafür ausgelegt sind, die Pumpe (4) zu steuern, umfasst, **dadurch gekennzeichnet, dass** die Steuerungsmittel (14) dafür ausgelegt sind, die Pumpe (4) in Abhängigkeit von der Außentemperatur zu aktivieren.

11. Klimaanlage nach Anspruch 10, **dadurch gekennzeichnet, dass** die Kühlvorrichtung einen Speicherbehälter (6) für die Speicherung von Zerstäubungswasser umfasst, wobei die Steuerungsmittel (14) dafür ausgelegt sind, die Pumpe (4) in Abhängigkeit vom Wasserstand im Behälter (6) zu aktivieren.

12. Klimaanlage nach Anspruch 10 oder 11, **dadurch gekennzeichnet, dass** die Kühlvorrichtung (1) ein Filter (13) umfasst, das für die Beseitigung von Verunreinigungen und/oder von organischen Schadstoffverbindungen aus der Kühlvorrichtung (1) bestimmt ist.

## Claims

1. Method for cooling a condenser of a motor vehicle air-conditioning system, the cooling method comprising a step of spraying water onto the condenser (2) via a cooling device (1) of the air-conditioning system comprising a water supply circuit (3) to which is coupled a water pump (4) intended to supply water to injection means (5) for the spraying of water onto the condenser (2), **characterized in that** the water pump (4) is activated by control means (14) of the cooling device (1) and the water pump (4) is activated as a function of the outside temperature.

2. Method according to Claim 1, **characterized in that** the spraying of water onto the condenser (2) is activated when the outside temperature is above 6°C.

3. Method according to Claim 1 or 2, **characterized in that** the water pump (4) is activated only if the air-conditioning system is in operation.

4. Method according to any one of the preceding claims, **characterized in that** the spray water is stored in a storage tank (6), the water pump (4) being activated only if the water level in the tank (6) lies between a minimum threshold and a maximum threshold.

5. Method according to any one of the preceding claims, **characterized in that** the working pressure of the water pump (4) lies between 2x10⁵ and 4x10⁵ Pa.

6. Method according to any one of the preceding claims, **characterized in that** the average size chosen for the water droplets sprayed onto the condenser (2) is between 50 and 100 µm.

7. Method according to any one of the preceding claims, **characterized in that** the spraying of water onto the condenser (2) is performed according to at least one split spraying cycle defined by sequencing of sequences of spraying and of stopping spraying.

8. Method according to Claim 7, **characterized in that** the profile of sequencing of sequences of spraying and of stopping spraying of the split cycle is determined as a function of the outside temperature and/or of the moisture content of the outside air.

9. Method according to any one of the preceding claims, **characterized in that** the water intended for the spraying of water onto the condenser (2) comes from the condensation of air through an evaporator (7) of the air-conditioning system.

10. Motor vehicle air-conditioning system comprising a cooling device (1) comprising a water supply circuit (3), a water pump (4) intended to supply water to injection means (5) for the spraying of water onto the condenser (2) and control means (14) configured to control the pump (4), **characterized in that** the control means (14) are configured to the activate the pump (4) as a function of the outside temperature.

11. System according to Claim 10, **characterized in that** the cooling device comprises a storage tank (6) for the storage of spray water, the control means (14) being configured to activate the pump (4) as a function of the water level in the tank (6).

12. System according to Claim 10 or 11, **characterized in that** the cooling device (1) comprises a filter (13) intended for the elimination of impurities and/or of organic compounds contaminating the cooling device (1).
